# EUROPEAN PATENT SPECIFICATION

(11) **EP 2 690 517 B1**
(45) Date of publication and mention of the grant of the patent: **13.04.2016**
(21) Application number: 12177929.2
(22) Date of filing: 26.07.2012
(51) Int. Cl.: G05B 23/02, H04R 5/033, H04R 29/00

(54) **Method and ear protection system for monitoring an industrial process**
Verfahren und Ohrschutzsystem zur Überwachung eines industriellen Verfahrens
Procédé et système de protection des oreilles pour surveiller un processus industriel

(43) Date of publication of application: 29.01.2014
(73) Proprietor: ABB Research Ltd., 8050 Zürich (CH)
(72) Inventor: Vartiainen, Elina, 722 18 Västerås (SE); Olausson, Martin, 724 82 Västerås (SE); Brönmark, Jonas, 722 27 Västerås (SE); Alfredsson, Fredrik, 724 71 Västerås (SE)
(74) Representative: Savela, Reino Aleksi

(56) References cited:
- WO-A1-2011/038838
- DE-A1-102008 021 607
- DE-U1- 29 706 151
- US-A1- 2008 249 744

## Description

### TECHNICAL FIELD

The present disclosure relates to a method and ear protection system for monitoring an industrial process.

### BACKGROUND

Industrial processes within industries such as oil and gas, pulp and paper, metals and mining, power generation, and petrochemical refineries utilise industrial process components, i.e. process equipment, for allowing the steps of the industrial process to be carried out. Such industrial process components may for example be tanks, valves, motors or controllers. The industrial process components together form an industrial process environment of an industrial process.

Process equipment is typically provided with one or more sensors measuring processes variables such that the industrial process may properly be monitored by a monitoring and control system. By means of the monitoring and control system the status of the various industrial process components of an industrial process may be monitored and controlled in real-time. The monitoring is typically provided in the form of process graphics presented on operator displays of e.g. a Supervisory Control And Data Acquisition system (SCADA). Monitoring can also be provided by means of display devices provided on industrial process components, arranged such that e.g. maintenance engineers may be able to inspect the condition and status of an industrial process component when the process engineer is located in an industrial process environment.

Alarm handling and awareness of the status of an industrial process component may involve communication between the operators in the control room and the maintenance engineer present in the industrial process environment. For example, alarm handling may require a maintenance engineer located in an industrial process environment to receive alarm information concerning an abnormal condition of an industrial process component from operators in the control room of the industrial process. Communication between the operator and maintenance engineer takes time, and is an inefficient way of allocating personnel resources.

DE 10 2008 021607 discloses a system provided with a model of a plant. Spatial coordinates are available for observed plant components. A specific aligned acoustic signal is available for conditions of a plant component in the model. An operator communicates binaural acoustic information about the localization or about the current condition of the plant component. In D1, stereo headphones are used and their direction and distance from a system component can be determined. Spatial sound is created and the user is under the impression that the sound originates from a plant component. The sound from a system component is an alarm.

### SUMMARY

In view of the above, it would be desirable to be able to provide a method and an ear protection system that allows for efficient alarm handling and status awareness of industrial process components for personnel located in an industrial process environment.

Hence, according to a first aspect of the present disclosure there is provided a method of monitoring an industrial process by means of an ear protection system having an ear protection unit with a left speaker and a right speaker, wherein the method comprises: obtaining a direction from which a sound is to be provided based on an angle between a coordinate system defined by the ear protection unit and a coordinate system defined by an industrial process environment of the industrial process, and on a location of the origin of the coordinate system of the ear protection unit in the coordinate system of the industrial process environment relative a location of an industrial process component in the coordinate system of the industrial process environment; obtaining real-time process variable data relating to at least one process variable of the industrial process component; and providing a 3-d sound that simulates an origination from the direction by means of at least one of the left speaker and the right speaker, which 3-d sound is indicative of a state of the industrial process component, wherein the 3-d sound simulates a realistic sound of the at least one process variable, reflecting a real-time state of the at least one process variable.

An effect obtainable thereby is that a user of the ear protection system may receive an indication of the state of the industrial process component which located in the obtained direction. Maintenance engineers may thereby be able to utilise their auditory senses for industrial process monitoring. In particular, the present disclosure provides industrial process monitoring by means of auditory augmented reality, with the sound being perceived to emanate from the direction of the industrial process component of interest.

One embodiment comprises obtaining a distance from the origin of the coordinate system of the ear protection unit in the coordinate system of the industrial process environment to the location of the industrial process component in the coordinate system of the industrial process environment, and prior to the step of providing the 3-d sound, determining an intensity of the 3-d sound based on the distance.

One embodiment comprises, prior to the step of obtaining the direction, receiving a selection of the industrial process component.

According to one embodiment the coordinate system of the industrial process is centred at the industrial process component that has been selected.

According to one embodiment the step of obtaining the direction is further based on an occurrence of an event at the industrial process component, wherein the 3-d sound is an alarm sound indicating the occurrence of the event.

According to a second aspect of the present disclosure there is provided a computer program comprising computer-executable components for causing an ear protection unit to perform the steps recited in to the first aspect when the computer-executable components are run on a processor included in the ear protection unit.

According to a third aspect there is provided a computer program product comprising a computer readable medium, the computer readable medium having the computer program of the second aspect embodied therein.

According to a fourth aspect of the present disclosure there is provided an ear protection system for monitoring an industrial process, wherein the ear protection system comprises: an ear protection unit having a left speaker and a right speaker; and a processor arranged to obtain a direction from which a sound is to be generated based on an angle between a coordinate system defined by the ear protection unit and a coordinate system defined by an industrial process environment of the industrial process, and on a location of the origin of the coordinate system of the ear protection unit in the coordinate system of the industrial process environment relative a location of an industrial process component in the coordinate system of the industrial process environment, and to generate a 3-d sound that simulates an origination from the direction, which 3-d sound is indicative of a state of the industrial process component, wherein the left speaker and the right speaker are arranged to provide 3-d sound generated by the processor, wherein the processor is arranged to obtain real-time process variable data relating to at least one process variable of the industrial process component, wherein the 3-d sound simulates a realistic sound of the at least one process variable, reflecting a real-time state of the at least one process variable.

According to one embodiment the processor is arranged to obtain a distance from the origin of the coordinate system of the ear protection unit in the coordinate system of the industrial process environment to the location of the industrial process component in the coordinate system of the industrial process environment, and to determine an intensity of 3-d sound to be generated by the processor based on the distance.

According to one embodiment the processor is arranged to receive a selection of the industrial process component.

According to one embodiment the coordinate system of the industrial process is centred at the industrial process component that has been selected.

According to one embodiment the processor is arranged to obtain the direction further based on an occurrence of an event at the industrial process component, wherein the 3-d sound is an alarm sound indicating the occurrence of the event.

Generally, all terms used in the claims are to be interpreted according to their ordinary meaning in the technical field, unless explicitly defined otherwise herein. All references to a/an/the element, apparatus, component, means, etc. are to be interpreted openly as referring to at least one instance of the element, apparatus, component, means, etc., unless explicitly stated otherwise. Moreover, any step in a method need not necessarily have to be carried out in the presented order, unless explicitly stated otherwise.

### BRIEF DESCRIPTION OF THE DRAWINGS

The specific embodiments of the inventive concept will now be described, by way of example, with reference to the accompanying drawings, in which:
Figs 1a-b shows examples of an ear protection system for monitoring an industrial process;
Figs 2a-b show coordinate systems of an ear protection unit and of an industrial process environment with the coordinate system of the ear protection unit depicted therein, respectively;
Figs 3a-b show examples of applications of the ear protection system in Figs 1a-b; and
Fig. 4 is a flowchart of methods of supervising an industrial process by means of an ear protection unit.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

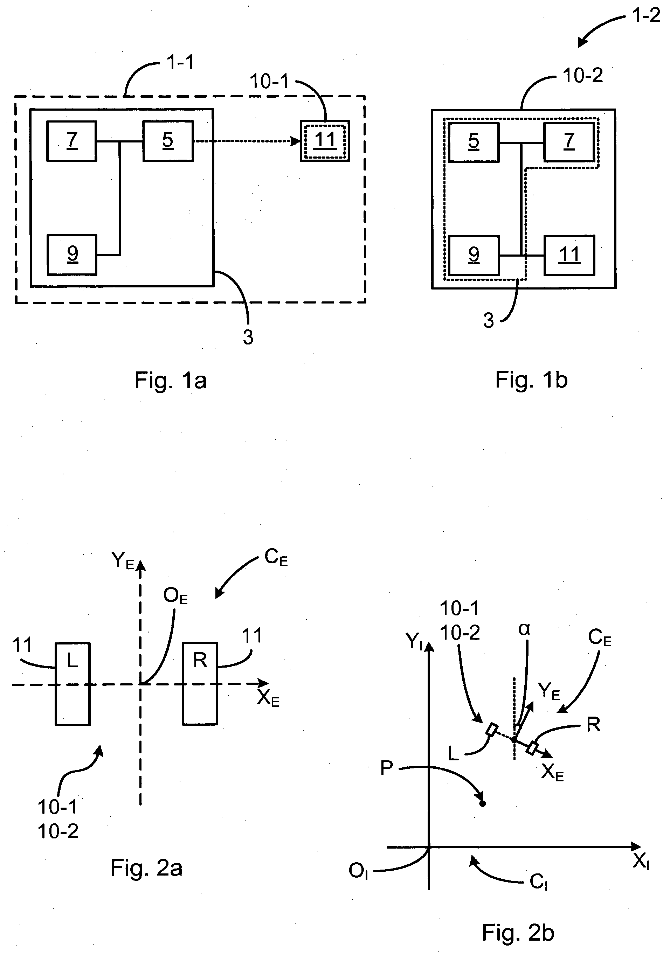

Fig. 1a depicts a first example of an ear protection system 1-1 comprising a mobile device 3 and an ear protection unit 10-1. An industrial process is to be understood to mean a procedure that involves chemical, electrical or mechanical steps to aid in manufacturing, production, power generation, fabrication, or refining. Examples of such industrial processes are processes relating to the refining of oil and gas, the petrochemical industry, power generation, power transmission, power distribution, metals and mining, chemical industry, pulp and paper, or automation in e.g. the manufacturing industry or food industry. An industrial process environment is an enclosed area in which chemical, electrical or mechanical steps of the industrial process are carried out. Examples of an industrial process environment are a plant floor or a substation.

The mobile device 3 comprises a processor 5, a memory 7, i.e. a computer readable medium having software stored therein which can be loaded into the processor to carry out the method presented herein, and an antenna 9. The mobile device 3 can for example be a smart phone, a tablet computer, or a portable device especially manufactured for use in an industrial process environment. The portion of the method presented herein and executed by the processor 5 may advantageously be implemented as a downloadable application if the mobile device 3 is embodied e.g. by a smart phone or a tablet computer.

The mobile device 3 is arranged to be connected to the ear protecting unit 10-1, e.g. an earmuff, which has two pads to protect the ears of a user of the ear protection unit 10-1. Each cap of the ear protection unit 10-1 comprises speakers 11 to allow the reproduction of 3 dimensional (3-d) sound or surround sound. The ear protection unit 10 may be connected to the mobile device 3 with a cord or cordlessly, e.g. by means of Bluetooth®.

Fig. 1b depicts a second example of an ear protection system. According to the second example, the functionality of the mobile device 3 is integrated with an ear protection unit 10-2, e.g. an earmuff. To that end, ear protection system 1-2 is embodied by ear protection unit 10-2, and comprises a processor 5, a memory 7, i.e. a computer readable medium having software stored therein which can be loaded into the processor to carry out the method presented herein, an antenna 9 and speakers 11.

According to one variation of each of the ear protection systems 1-1 and 1-2, the processor may be arranged to filter out ambient sound. According to this variation, the ear protection system of each of the first and the second example may comprise a microphone for recording ambient sound, wherein the processor may be arranged to create sound waves that interfere with the ambient sound so as provide a destructive interference effect.

Each of the ear protection systems 1-1 and 1-2 is arranged to wirelessly communicate, by means of antenna 9, with an industrial control system such as a Distributed Control System (DCS), a SCADA system or a combination of a SCADA system and DCS system. An example of an industrial control system for this purpose is the ABB® 800xA control system.

The processor 5 of ear protection system 1-1, 1-2 is arranged to obtain a direction from which a sound is to be generated in a coordinate system defined by ear protection unit 10-1 and 10-2, respectively, and to generate a 3-d sound that simulates an origination from the direction. The 3-d sound generated by the processor 5 provides an indication of a state of a specific industrial process component located in the direction from which the 3-d sound is simulated to originate from, thereby allowing a person wearing the ear protection unit 10-1,10-2 to obtain an understanding of the current status or state of the industrial process component.

Fig. 2a shows a coordinate system C_{E} defined by ear protection unit 10-1, 10-2. The origin O_{E} of the coordinate system C_{E} is arranged at a centre point between a left speaker L and a right speaker R of the ear protection unit 10-1, 10-2. The origin O_{E} of the coordinate system C_{E} defines the centre point of a soundscape that can be provided by the left speaker L and the right speaker R. The x-axis X_{E} of the coordinate system C_{E} goes straight through the centre points of the left speaker L and the right speaker R from a direction from the left speaker L to the right speaker R. The y-axis Y_{E} defines a reference axis along which sound is either perceived to be originating straight from behind or straight in front of a person wearing the ear protection unit 10-1, 10-2.

Fig. 2b shows a coordinate system C_{I} of an industrial process environment with the ear protection unit io-i, io-2 and thus the coordinate system C_{E} defined by the ear protection unit 10-1, 10-2 and an industrial process component P arranged in the coordinate system C_{I} of the industrial process environment. In the example in Fig. 2b the coordinate system C_{E} of the ear protection unit 10-1, 10-2 is arranged at an angle α relative the coordinate system C_{I} of the industrial process environment. A direction from which a 3-d sound is to be generated by the processor 5 of ear protection system 1-1, 1-2, which direction is the direction of the industrial process component P in the coordinate system C_{E} of the ear protection unit 10-1, 10-2, is obtained based on the angle α between the coordinate system C_{E} defined by the ear protection unit 10-1,10-2 and the coordinate system C_{I} defined by the industrial process environment, and on a location of the origin OE of the coordinate system C_{E} of the ear protection unit 10-1, 10-2 in the coordinate system C_{I} of the industrial process environment relative the location of the industrial process component P in the coordinate system C_{I} of the industrial process environment.

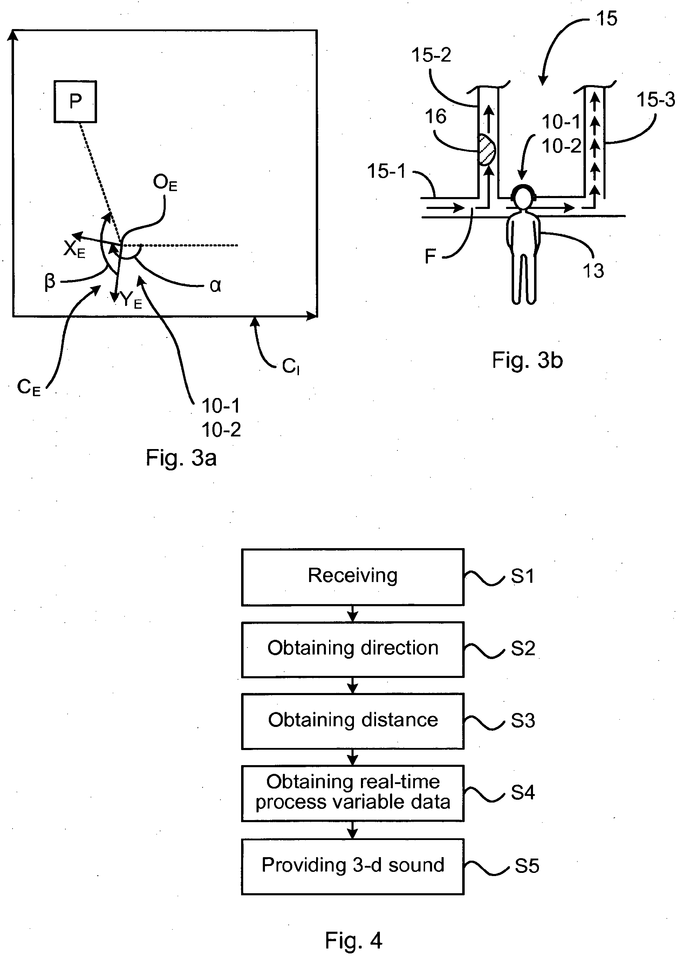

With reference to Figs 3a-b and Fig. 4, the operation of the ear protection system 1-1, 1-2 when monitoring an industrial process will now be described in more detail.

A user of the ear protection system 1-1, 1-2, which typically is a maintenance engineer, advantageously carries with him, or her, the ear protection system 1-1, 1-2 when situated in an industrial process environment to thereby be able to monitor the status of industrial process components arranged in the industrial process environment.

The industrial control system that is arranged to monitor and control the industrial process is arranged to receive process variable data relating to the process variables that are to be controlled by the industrial control system from a plurality of sensors arranged to measure the process variables of the industrial process.

According to one embodiment, in a step S1 a selection of an industrial process component is received by the processor 5. Based on the selection, the processor 5 will generate a 3-d sound from the direction of the selected industrial process component in the coordinate system C_{E} of the ear protection unit 10-1, 10-2, as will be described below. The selection may for example be based on a user selection, wherein the processor 5 receives a user selection of an industrial process component which e.g. the maintenance engineer would like to examine. The selection may for example be obtained based on a direction in which the mobile device 3 or the ear protection unit 10-2 is oriented in the coordinate system C_{I} of the industrial process environment, by means of a Radio Frequency Identification (RFID) tag arranged on the industrial process component, a matrix barcode arranged on the industrial process component, or by means of special glasses worn by the user of the ear protection system, the glasses being arranged to provide an identification of industrial process components in an industrial process environment.

Alternatively, an industrial process component may be selected automatically by the industrial control system or the processor 5 when an event creating an alarm has occurred in the industrial process. Such a selection may thus be based on process variable values for example.

The coordinate system of the industrial process may be centred at the industrial process component that has been selected, or alternatively, it may be fixedly centred at a reference point in the industrial process environment.

A direction from which a 3-d sound is to be generated by the processor 5 is in a step S2 obtained based on an angle α between the coordinate system C_{E} defined by the ear protection unit 10-1, 10-2 and the coordinate system C_{I} defined by the industrial process environment, and on a location of the origin O_{E} of the coordinate system C_{E} of the ear protection unit in the coordinate system of the industrial process environment C_{I} relative a location of the industrial process component in the coordinate system C_{I} of the industrial process environment. The location of the ear protection system 1-1, 1-2 in the industrial process environment coordinate system C_{I} may for example be obtained by means of a Global Navigation Satellite System (GNSS) such as the Global Positioning System (GPS), a Wi-Fi based positioning system or other suitable indoor positioning systems. The angle α between the coordinate system C_{E} of the ear protection unit 10-1, 10-2 and the coordinate system C_{I} of the industrial process environment can for example be determined by means of a gyroscope provided in the ear protection system 1-1, 1-2.

According to one variation, the location of the origin O_{E} may be determined by the processor 5 wherein the location or position is sent to the industrial control system such that the industrial control system may determine the direction in which the ear protection system 1-1, 1-2 is to generate a 3-d sound. The direction from which the 3-d sound is to be generated may thereby be obtained from the industrial control system. Alternatively, the direction from which a 3-d sound is to be generated may be obtained by the processor 5 determining the direction based on the same parameters as mentioned above. Alternatively, the ear protection system 1-1, 1-2 many be arranged to transmit signals which can be used by the industrial control system to determine the location or position of the ear protection unit 10-1, 10-2 wherein the location is determined by the industrial control system such that the industrial control system may determine the direction in which the ear protection system 1-1, 1-2 is to generate a 3-d sound. The direction from which the 3-d sound is to be generated may thereby be obtained from the industrial control system.

According to one embodiment, a distance from the origin O_{E} of the coordinate system C_{E} of the ear protection unit 10-1,10-2 in the coordinate system C_{I} of the industrial process environment to the location of the industrial process component in the coordinate system C_{I} of the industrial process environment is obtained in a step S3. An intensity of the 3-d sound to be generated by the processor 5 can according to such an embodiment be based on the distance. A user of the ear protection system 1-1, 1-2 may by means of the sound intensity be able to obtain an understanding of the distance to the industrial process component in question. The distance is advantageously updated as the ear protection unit 10-1, 10-2 moves, by being carried by its user, in the coordinate system C_{I} of the industrial process. Thereby the intensity of the 3-d sound that is provided can be varied based on the distance. It is to be noted that step S3 may be performed prior to or after step S2.

In a step S5 a 3-d sound that simulates an origination from the direction by means of at least one of the left speaker and the right speaker is provided as it is generated or has been generated by the processor 5. The 3-d sound is indicative of a state of the industrial process component.

According to one embodiment, real-time process variable data relating to at least one process variable of the industrial process component is obtained in a step S4, prior to step S5 of providing a 3-d sound. The real-time process variable data may for example be provided by the industrial control system-The real-time process variable data may for example relate to a fluid flow in a pipe or the rate of combustion in a boiler. According to such an embodiment, the 3-d sound simulates a realistic sound of the at least one process variable, reflecting a real-time state of the at least one process variable. The processor 5 may generate a 3-d sound that has an origination that continuously moves in the coordinate system C_{E} of the ear protection unit 10-1, 10-2 reflecting a movement of the at least one process variable that it simulates. Hence, a maintenance engineer may be able to hear a simulation of a fluid flowing from left to right in e.g. a pipe.

Fig. 3a shows an example where the coordinate system C_{E} defined by the ear protection unit 10-1, 10-2 is arranged at an angle α relative the coordinate system C_{I} of an industrial process environment. Based on the location of the origin O_{E} of the coordinate system C_{E} defined by the ear protection unit 10-1, 10-2 relative an industrial process component P that is subjected to an event, a direction, at an angle β in the coordinate system C_{E} of the ear protection unit 10-1, 10-2, from which a 3-d sound is to be generated by the processor 5 and provided by speakers 11 is obtained. The 3-d sound provided by the speakers 11 is an alarm sound indicating the occurrence of the event, the 3-d sound simulating an origination from the direction of the industrial process component P in the coordinate system C_{E} defined by the ear protection unit 10-1, 10-2. According to the example in Fig. 3a, the occurrence of the event triggered the selection of the industrial process component P, and thus the generation of the 3-d sound. Thereby, a maintenance engineer may be able to quickly become aware of the status of the industrial process component P and follow the direction, which is continually updated as the ear protection unit 10-1, 10-2 and thus the coordinate system C_{E} defined by the ear protection unit, moves in the coordinate system C_{I} of the industrial process environment, to arrive at the location of the industrial process component P and possible perform a mitigating action.

Fig. 3b shows an example where a maintenance engineer 13 stands in front of industrial process components in the form of a piping system 15 comprising a first pipe 15-1, a second pipe 15-2 and a third pipe 15-3, in which a fluid F flows. The maintenance engineer 13 may by means of the ear protection system 10-1, 10-2 select which one of the first pipe 15-1, a second pipe 15-2 and a third pipe 15-3 he would like to monitor or examine the status of. The second pipe 15-2 has been partially blocked by e.g. organic deposit 16 reducing the fluid flow in the second pipe 15-2. By selecting the second pipe 15-2, it is envisaged that the maintenance engineer will not only hear a simulation of a fluid flow sound that is weaker than it should be if the second pipe 15-2 would function properly, but also that the direction of the fluid flow can be perceived by the user of the ear protection unit 10-1, 10-2. In the example of Fig. 3b, an upwardly flow direction would hence be heard by the maintenance engineer 13 wearing ear protection unit 10-1, 10-2. Thus, the maintenance engineer's awareness of the status of the industrial process component will be enhanced.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of monitoring an industrial process by means of an ear protection system (1-1; 1-2) having an ear protection unit (10-1; 10-2) with a left speaker (L) and a right speaker (R), wherein the method comprises:
obtaining (S2) a direction from which a sound is to be provided based on an angle (α) between a coordinate system (C_{E}) defined by the ear protection unit (10-1; 10-2) and a coordinate system (C_{I}) defined by an industrial process environment of the industrial process, and on a location of the origin (O_{E}) of the coordinate system (C_{E}) of the ear protection unit (10-1; 10-2) in the coordinate system (C_{I}) of the industrial process environment relative a location of an industrial process component (P) in the coordinate system (C_{I}) of the industrial process environment,
obtaining (S4) real-time process variable data relating to at least one process variable of the industrial process component, and
providing (S5) a 3-d sound that simulates an origination from the direction by means of at least one of the left speaker (L) and the right speaker (R), which 3-d sound is indicative of a state of the industrial process component, **characterized in that** the 3-d sound simulates a realistic sound of the at least one process variable, reflecting a real-time state of the at least one process variable.

2. The method as claimed in claim 1, comprising obtaining (S3) a distance from the origin of the coordinate system (C_{E}) of the ear protection unit (10-1; 10-2) in the coordinate system of the industrial process environment to the location of the industrial process component in the coordinate system of the industrial process environment, and prior to the step (S5) of providing the 3-d sound, determining an intensity of the 3-d sound based on the distance.

3. The method as claimed in claim 1 or 2, comprising, prior to the step (S2) of obtaining the direction, receiving a selection of the industrial process component.

4. The method as claimed in claim 3, wherein the coordinate system (C_{I}) of the industrial process is centred at the industrial process component that has been selected.

5. The method as claimed in any of the preceding claims, wherein the step of obtaining the direction (S2) is further based on an occurrence of an event at the industrial process component, wherein the 3-d sound is an alarm sound indicating the occurrence of the event.

6. A computer program comprising computer-executable components for monitoring an industrial process by means of an ear protection system having an ear protection unit with a left speaker (L) and a right speaker (R), and a processor, said computer-executable components being adapted to cause the steps recited in any one of claims 1-5 to be performed when the computer-executable components are run on said processor.

7. A computer program product comprising a computer readable medium, the computer readable medium having the computer program according to claim 6 embodied therein.

8. An ear protection system (1-1; 1-2) for monitoring an industrial process, wherein the ear protection system (1-1; 1-2) comprises:
an ear protection unit (10-1; 10-2) having a left speaker (L) and a right speaker (R), and
a processor (5) arranged to obtain a direction from which a sound is to be generated based on an angle (α) between a coordinate system (C_{E}) defined by the ear protection unit (10-1; 10-2) and a coordinate system (C_{I}) defined by an industrial process environment of the industrial process, and on a location of the origin (O_{E}) of the coordinate system (C_{E}) of the ear protection unit (10-1; 10-2) in the coordinate system (C_{I}) of the industrial process environment relative a location of an industrial process component (P) in the coordinate system (C_{I}) of the industrial process environment, and to generate a 3-d sound that simulates an origination from the direction, which 3-d sound is indicative of a state of the industrial process component, wherein the left speaker and the right speaker are arranged to provide 3-d sound generated by the processor, wherein the processor (5) is arranged to obtain real-time process variable data relating to at least one process variable of the industrial process component, **characterized in that** the 3-d sound simulates a realistic sound of the at least one process variable, reflecting a real-time state of the at least one process variable.

9. The ear protection system (1-1; 1-2) as claimed in claim 8, wherein the processor (5) is arranged to obtain a distance from the origin of the coordinate system of the ear protection unit in the coordinate system of the industrial process environment to the location of the industrial process component in the coordinate system of the industrial process environment, and to determine an intensity of 3-d sound to be generated by the processor based on the distance.

10. The ear protection system (1-1; 1-2) as claimed in claim 8 or 9, wherein the processor (5) is arranged to receive a selection of the industrial process component.

11. The ear protection system (1-1; 1-2) as claimed in any of claims 8-10, wherein the coordinate system of the industrial process is centred at the industrial process component that has been selected.

12. The ear protection system (1-1; 1-2) as claimed in any of claims 8-11, wherein the processor (5) is arranged to obtain the direction further based on an occurrence of an event at the industrial process component, wherein the 3-d sound is an alarm sound indicating the occurrence of the event.

## Patentansprüche

1. Verfahren zum Überwachen eines industriellen Vorgangs mit Hilfe eines Gehörschutzsystems (1-1; 1-2) mit einer Gehörschutzeinheit (10-1; 10-2) mit einem linken Lautsprecher (L) und einem rechten Lautsprecher (R), wobei das Verfahren Folgendes umfasst:
Erhalten (S2) einer Richtung, aus der ein Geräusch bereitzustellen ist, anhand eines Winkels (α) zwischen einem Koordinatensystem (C_{E}), das durch die Gehörschutzeinheit (10-1; 10-2) definiert ist, und einem Koordinatensystem (C₁), das durch eine industrielle Prozessumgebung des industriellen Prozesses definiert ist, und eines Orts des Ursprungs (O_{E}) des Koordinatensystems (C_{E}) der Gehörschutzeinheit (10-1; 10-2) in dem Koordinatensystem (C_{I}) der industriellen Prozessumgebung in Bezug auf einen Ort einer industriellen Prozesskomponente (P) in dem Koordinatensystem (C_{I}) der industriellen Prozessumgebung,
Erhalten (S4) von Echtzeitprozessvariablendaten, die sich auf mindestens eine Prozessvariable der industriellen Prozesskomponente beziehen, und
Bereitstellen (S5) eines 3d-Geräusches, das mit Hilfe des linken Lautsprechers (L) und/oder des rechten Lautsprechers (R) eine Entstehung aus der Richtung simuliert, wobei das 3d-Geräusch einen Zustand der industriellen Prozesskomponente angibt, **dadurch gekennzeichnet, dass** das 3d-Geräusch ein realistisches Geräusch der mindestens einen Prozessvariablen simuliert, das einen Echtzeitzustand der mindestens einen Prozessvariablen wiederspiegelt.

2. Verfahren nach Anspruch 1, das umfasst, einen Abstand von dem Ursprung des Koordinatensystems (C_{E}) der Gehörschutzeinheit (10-1; 10-2) in dem Koordinatensystem der industriellen Prozessumgebung zu dem Ort der industriellen Prozesskomponente in dem Koordinatensystem der industriellen Prozessumgebung zu erhalten (S3) und vor dem Schritt (S5), in dem das 3d-Geräusch bereitgestellt wird, eine Stärke des 3d-Geräuschs anhand des Abstands zu bestimmen.

3. Verfahren nach Anspruch 1 oder 2, das umfasst, vor dem Schritt (S2) des Erhaltens der Richtung, eine Auswahl der industriellen Prozesskomponente zu empfangen.

4. Verfahren nach Anspruch 3, wobei das Koordinatensystem (C_{I}) des industriellen Prozesses auf die industrielle Prozesskomponente, die ausgewählt wurde, zentriert ist.

5. Verfahren nach einem der vorhergehenden Ansprüche, wobei der Schritt des Erhaltens der Richtung (S2) ferner auf einem Auftreten eines Ereignisses an der industriellen Prozesskomponente basiert, wobei das 3d-Geräusch ein Alarmgeräusch ist, das das Auftreten des Ereignisses angibt.

6. Computerprogramm, das computerausführbare Komponenten zum Überwachen eines industriellen Prozesses mit Hilfe eines Gehörschutzsystems mit einer Gehörschutzeinheit mit einem linken Lautsprecher (L) und einem rechten Lautsprecher (R) und einem Prozessor umfasst, wobei die computerausführbaren Komponenten ausgelegt sind, zu bewirken, dass die Schritte nach einem der Ansprüche 1-5 ausgeführt werden, wenn die computerausführbaren Komponenten auf dem Prozessor laufen.

7. Computerprogrammprodukt, das ein computerlesbares Medium umfasst, wobei das computerlesbare Medium das Computerprogramm nach Anspruch 6 enthält.

8. Gehörschutzsystem (1-1; 1-2) zum Überwachen eines industriellen Prozesses, wobei das Gehörschutzsystem (1-1; 1-2) Folgendes umfasst:
eine Gehörschutzeinheit (10-1; 10-2) mit einem linken Lautsprecher (L) und einem rechten Lautsprecher (R) und
einen Prozessor (5), der ausgelegt ist, eine Richtung zu erhalten, aus der ein Geräusch zu erzeugen ist, anhand eines Winkels (α) zwischen einem Koordinatensystem (C_{E}), das durch die Gehörschutzeinheit (10-1; 10-2) definiert ist, und einem Koordinatensystem (C_{I}), das durch eine industrielle Prozessumgebung des industriellen Prozesses definiert ist, und eines Ortes des Ursprungs (O_{E}) des Koordinatensystems (C_{E}) der Gehörschutzeinheit (10-1; 10-2) in dem Koordinatensystem (C_{I}) der industriellen Prozessumgebung in Bezug auf einen Ort einer industriellen Prozesskomponente (P) in dem Koordinatensystem (C_{I}) der industriellen Prozessumgebung, und ein 3d-Geräusch zu erzeugen, das einen Ursprung aus der Richtung simuliert, wobei das 3d-Geräusch einen Zustand der industriellen Prozesskomponente angibt, wobei der linke Lautsprecher und der rechte Lautsprecher ausgelegt sind, ein 3d-Geräusch, das durch den Prozessor erzeugt wird, bereitzustellen, wobei der Prozessor (5) ausgelegt ist, Echtzeitprozessvariablendaten zu erhalten, die sich auf mindestens eine Prozessvariable der industriellen Prozesskomponente beziehen, **dadurch gekennzeichnet, dass** das 3d-Geräusch ein realistisches Geräusch der mindestens einen Prozessvariablen simuliert, das einen Echtzeitzustand der mindestens einen Prozessvariablen wiederspiegelt.

9. Gehörschutzsystem (1-1; 1-2) nach Anspruch 8, wobei der Prozessor (5) ausgelegt ist, einen Abstand von dem Ursprung des Koordinatensystems der Gehörschutzeinheit in dem Koordinatensystem der industriellen Prozessumgebung zu dem Ort der industriellen Prozesskomponente in dem Koordinatensystem der industriellen Prozessumgebung zu erhalten und eine Stärke des durch den Prozessor zu erzeugenden 3d-Geräuschs anhand des Abstands zu bestimmen.

10. Gehörschutzsystem (1-1; 1-2) nach Anspruch 8 oder 9, wobei der Prozessor (5) ausgelegt ist, eine Auswahl der industriellen Prozesskomponente zu empfangen.

11. Gehörschutzsystem (1-1; 1-2) nach einem der Ansprüche 8-10, wobei das Koordinatensystem des industriellen Prozesses auf die industrielle Prozesskomponente, die ausgewählt wurde, zentriert ist.

12. Gehörschutzsystem (1-1; 1-2) nach einem der Ansprüche 8-11, wobei der Prozessor (5) ausgelegt ist, die Richtung ferner anhand eines Auftretens eines Ereignisses an der industriellen Prozesskomponente zu erhalten, wobei das 3d-Geräusch ein Alarmgeräusch ist, das das Auftreten des Ereignisses angibt.

## Revendications

1. Procédé de surveillance d'un processus industriel au moyen d'un système de protection auditive (1-1 ; 1-2) comportant une unité de protection auditive (10-1 ; 10-2) dotée d'un haut-parleur gauche (L) et un haut-parleur droit (R), le procédé comprenant :
l'obtention (S2) d'un sens depuis lequel un son doit être produit d'après un angle (α) entre un système de coordonnées (C_{E}) défini par l'unité de protection auditive (10-1 ; 10-2) et un système de coordonnées (C_{I}) défini par un environnement de processus industriel du processus industriel, et d'après un lieu de l'origine (O_{E}) du système de coordonnées (C_{E}) de l'unité de protection auditive (10-1 ; 10-2) dans le système de coordonnées (C_{I}) de l'environnement de processus industriel relativement à un lieu d'un composant de processus industriel (P) dans le système de coordonnées (C_{I}) de l'environnement de processus industriel,
l'obtention (S4) de données de variable de processus en temps réel relatives à une variable de processus du composant de processus industriel, et
la production (S5) d'un son 3D qui simule une provenance depuis le sens au moyen d'au moins l'un du haut-parleur gauche (L) et du haut-parleur droit (R), lequel son 3D est indicatif d'un état du composant de processus industriel, **caractérisé en ce que** le son 3D simule un son réaliste de l'au moins une variable de processus, reflétant un état en temps réel de l'au moins une variable de processus.

2. Procédé selon la revendication 1, comprenant l'obtention (S3) d'une distance depuis l'origine du système de coordonnées (C_{E}) de l'unité de protection auditive (10-1 ; 10-2) dans le système de coordonnées de l'environnement de processus industriel jusqu'au lieu du composant de processus industriel dans le système de coordonnées de l'environnement de processus industriel, et avant l'étape (S5) de production du son 3D, la détermination d'une intensité du son 3D en fonction de la distance.

3. Procédé selon la revendication 1 ou 2, comprenant, avant l'étape (S2) d'obtention du sens, la réception d'une sélection du composant de processus industriel.

4. Procédé la selon revendication 3, dans lequel le système de coordonnées (C_{I}) du processus industriel est centré sur le composant de processus industriel qui a été sélectionné.

5. Procédé selon l'une quelconque des revendications précédentes, dans lequel l'étape d'obtention du sens (S2) est basée en outre sur une occurrence d'un événement au niveau du composant de processus industriel, dans lequel le son 3D est un son d'alarme indiquant l'occurrence de l'événement.

6. Programme informatique comprenant des composants exécutables sur ordinateur pour surveiller un processus industriel au moyen d'un système de protection auditive comportant une unité de protection auditive dotée d'un haut-parleur gauche (L) et d'un haut-parleur droit (R), et un ordinateur, lesdits composants exécutables sur ordinateur étant adaptés pour entraîner l'exécution des étapes selon l'une quelconque des revendications 1 à 5 quand les composants exécutables sur ordinateur sont exécutés sur ledit processeur.

7. Produit de programme informatique comprenant un support lisible par ordinateur, le support lisible par ordinateur comportant le programme informatique selon la revendication 6.

8. Système de protection auditive (1-1 ; 1-2) pour surveiller un processus industriel, le système de protection auditive (1-1 ; 1-2) comprenant :
une unité de protection auditive (10-1 ; 10-2) dotée d'un haut-parleur gauche (L) et d'un haut-parleur droit (R), et
un processeur (5) agencé pour obtenir un sens depuis lequel un son doit être généré d'après un angle (α) entre un système de coordonnées (C_{E}) défini par l'unité de protection auditive (10-1 ; 10-2) et un système de coordonnées (C_{I}) défini par un environnement de processus industriel du processus industriel, et d'après un lieu de l'origine (O_{E}) du système de coordonnées (C_{E}) de l'unité de protection auditive (10-1 ; 10-2) dans le système de coordonnées (C_{I}) de l'environnement de processus industriel relativement à un lieu d'un composant de processus industriel (P) dans le système de coordonnées (C_{I}) de l'environnement de processus industriel, et générer un son 3D qui simule une provenance depuis le sens, lequel son 3D est indicatif d'un état du composant de processus industriel, dans lequel le haut-parleur gauche et le haut-parleur droit sont agencés pour produire un son 3D généré par le processeur, dans lequel le processeur (5) est agencé pour obtenir des données de variable de processus en temps réel relatives à au moins une variable de processus du composant de processus industriel, **caractérisé en ce que** le son 3D simule un son réaliste de l'au moins une variable de processus, reflétant un état en temps réel de l'au moins une variable de processus.

9. Système de protection auditive (1-1 ; 1-2) selon la revendication 8, dans lequel le processeur (5) est agencé pour obtenir une distance depuis l'origine du système de coordonnées de l'unité de protection auditive dans le système de coordonnées de l'environnement de processus industriel jusqu'au lieu du composant de processus industriel dans le système de coordonnées de l'environnement de processus industriel, et déterminer une intensité du son 3D destiné à être généré par le processeur en fonction de la distance.

10. Système de protection auditive (1-1 ; 1-2) selon la revendication 8 ou 9, dans lequel le processeur (5) est agencé pour recevoir une sélection du composant de processus industriel.

11. Système de protection auditive (1-1 ; 1-2) selon l'une quelconque des revendications 8 à 10, dans lequel le système de coordonnées du processus industriel est centré sur le composant de processus industriel qui a été sélectionné.

12. Système de protection auditive (1-1 ; 1-2) selon l'une quelconque des revendications 8 à 11, dans lequel le processeur (5) est agencé pour obtenir le sens en se basant en outre sur une occurrence d'un événement au niveau du composant de processus industriel, dans lequel le son 3D est un son d'alarme indiquant l'occurrence de l'événement.
